# EUROPÄISCHE PATENTANMELDUNG

(11) **EP 2 258 572 A2**
(43) Veröffentlichungstag der Anmeldung: **08.12.2010**
(21) Anmeldenummer: 10163935.9
(22) Anmeldetag: 26.05.2010
(51) Int. Cl.: B60H 1/34

(54) **Luftausströmer**

(30) Priorität: 05.06.2009 DE 102009024114
(71) Anmelder: Behr GmbH & Co. KG, 70469 Stuttgart (DE)
(72) Erfinder: Röhm, Klaus, 70736, Fellbach (DE)

(57) **Zusammenfassung**

Bei einem Luftausströmer (1), insbesondere für ein Fahrzeuginnenraum-Belüftungssystem, umfassend wenigstens einen S-Luftzuführungskanal (6b) und wenigstens einen D-Luftxufuhfungskanal (7b), wenigstens eine S-Auslassöffnufig (8b) zum Ausleiten der Luft aus dem wenigstens einen S-Luftzufühfungskanal (6b) als Spotstrahl, wenigstens eine D-Auslassöffnung (9b) zum Ausleiten der Luft aus dem wenigstens einen D-Luftzuführungskanal (7b) als Diffus- oder Drallstrahl, wenigstens eine S-Luftleiteinrichtung (10b) zur Steuerung der aus der wenigstens einen S-Auslassöffnung (8b) ausleitbaren Luftmenge, soll die aus Auslassöffnungen (8b, 9b) ausleitbare Luftmenge für einen Sport- und einen Drallstrahl einfach mit einem geringen konstruktiven Aufwand gesteuert werden können. Diese Aufgabe wird dadurch gelöst, dass der Luftausströmer (1) keine D-Luftleiteinrichtung zur, insbesondere ausschließlichen, Steuerung der aus der wenigstens einen D-Auslassöffnung (9b) ausleitbaren Luftmenge aufweist.

## Beschreibung

Die Erfindung betrifft einen Luftausströmer gemäß dem Oberbegriff des Anspruches 1 und eine Kraftfahrzeugklimaanlage.

In Kraftfahrzeugen werden Luftausströmer eingesetzt, um Luft in den Innenraum des Kraftfahrzeuges einzuleiten, Die in den Innenraum mittels Luftausströmer eingeleitete Luft wird, soweit Bedarf besteht, in einer Klimaanlage erwärmt und/oder gekühlt.

Es sind Luftdüsen oder Luftausströmer bekannt, welche eine S-Auslassöffnung zum Ausleiten der Luft als Spotstrahl und eine D-Auslassöffnung zum Ausleiten der Luft als Diffus- oder Drallstrahl aufweisen. Bei einem Drallstrahl weist die Luft an der D-Auslassöffnung eine schraubenlinienförmige Strömung auf. Die Luftströmung weist somit eine Translationsbewegung und eine Rotationsbewegung auf. Die der D-Auslassöffnung durch einen Luftzuführungskanal mit einer Strömung in einer Translationsbewegung zugeleitete Luft wird im Bereich der D-Auslassöffnung mittels Luftleitvorrichtungen zusätzlich dahingehend umgelenkt, dass die Strömung auch eine Rotationsbewegung aufweist. Zur Steuerung der aus der D- und S-Auslassöffnung ausleitbaren Luft sind die Luftausströmer mit Luftklappen versehen.

Die DE 10 2005 054 292 A1 zeigt einen Luftausströmer für ein Kraftfahrzeug. Der Luftausströmer weist zwei im Querschnitt kreisförmige Auslassöffnungen zum Ausleiten der Luft als Spotstrahl und Auslassöffnungen zum Ausleiten der Luft als Diffus- oder Drallstrahl auf. Die Auslassöffnungen zum Ausleiten der Luft als Diffus- oder Drallstrahl können von zwei Luftklappen geöffnet und geschlossen werden, die um zwei separate Schwenkachsen verschwenkbar sind. Diese beiden Luftklappen sind E-förmig.

Die DE 10 2004 038 016 A1 zeigt einen gattungsbildenden Luftausströmer für ein Kraftfahrzeug. Der Luftausströmer weist S-Auslassöffnungen zum Ausleiten der Luft als Spotstrahl und D-Auslassöffnungen zum Ausleiten der Luft als Diffus- oder Drallstrahl auf. Luftklappen in Teilkanälen sind über eine Welle und eine Kurvenscheibe derart steuerbar, dass Teilkanäle einzeln geöffnet und geschlossen werden können. Dadurch kann ausschließlich entweder aus den S-Auslasseiffnungen oder aus den D-Auslassöffnungen Luft ausgeleitet werden. Zwischenbereiche können beliebig angesteuert werden. In nachteiliger Weise ist damit eine konstruktiv aufwendige und teure Steuerung der Luftklappen mittels Kurvenscheiben erforderlich.

Die Aufgabe der vorliegenden Erfindung besteht deshalb darin, eine Luftausströmer und eine Kraftfahrzeugklimaanlage zur Verfügung zu stellen, bei der die aus Auslassöffnungen ausleitbare Luftmenge für einen Spot- und einen Drallstrahl einfach mit einem geringen konstruktiven Aufwand gesteuert werden kann. Ferner soll der Luftausströmer wenig Bauraum benötigen.

Diese Aufgabe wird gelöst mit einem Luftausströmer, insbesondere für ein Fahrzeuginnenraumbelüftungssystem, umfassend wenigstens einen S-Luftzuführungskanal und wenigstens einen D-Luftzuführungskanal, wenigstens eine S-Auslassöffnung zum Ausleiten der Luft aus dem wenigstens einen S-Luftzuführungskanal als Spotstrahl, wenigstens eine D-Auslassöffnung zum Ausleiten der Luft aus dem wenigstens einen D-Luftzuführungskanal als Diffus- oder Drallstrahl, wenigstens eine S-Luftleiteinrichtung zur Steuerung der aus der wenigstens einen S-Auslassöffnung ausleitbaren Luftmenge, wobei der Luftausströmer keine D-Luftleiteinrichtung zur, insbesondere ausschließlichen, Steuerung der aus der wenigstens einen D-Auslassöffrrung ausleitbaren Luftmenge aufweist.

Mittels der wenigstens einen S-Luftleiteinrichtung kann die aus der S-Auslassöffnung ausleitbare Luftmenge gesteuert und/oder geregelt werden. Dabei kann entweder die wenigstens eine S-Auslassöffnung vollständig geöffnet werden, so dass die maximal mögliche ausleitbare Luftmenge aus der wenigstens einen S-Auslassöffnung ausströmt oder die wenigstens eine S-Auslassöffnung vollständig geschlossen werden, so dass keine Luft aus der wenigstens einen S-Auslassöffnung ausleitbar ist. Zwischenstellungen können beliebig eingestellt werden. Mittels der wenigstens einen S-Luftleiteinrichtung kann zwischen den Ausströmmoden ausschließlich Ausleiten von Luft aus der wenigstens einen S-Auslassöffnung und Ausleiten von Luft aus der wenigstens einen S-Auslassöffnung sowie gleichzeitig aus der wenigstens einen S-Auslassöffnung gesteuert und/oder geregelt werden. Zwischenstellungen können beliebig eingestellt werden. In vorteilhafter Weise ist damit an dem Luftausströmer keine konstruktiv aufwendige Steuerung der Luftleiteinrichtungen mittels Kurvenscheiben erforderlich.

Insbesondere dient die wenigstens eine S-Luftleiteinrichtung ausschließlich zur Steuerung der aus der wenigstens einen S-Auslassöffnung ausleitbaren Luftmenge.

In einer weiteren Ausgestaltung ist die wenigstens eine S-Luftleiteinrichtung eine S-Luftklappe oder ein S-Rollband oder ein S-Schirm.

In einer ergänzenden Ausführungsform dient die wenigstens eine S-Luftleiteinrichtung zur ausschließlichen Steuerung der aus der wenigstens einen S-Auslassöffnung ausleitbaren Luftmenge.

Vorzugsweise ist die wenigstens eine S-Luftleiteinrichtung in dem wenigstens einen S-Luftzuführungskanal angeordnet.

In einer weiteren Ausgestaltung weist der Luftausströmer keinen in dem wenigstens einen D-Luftzuführungskanal angeordnete D-Luftleiteinrichtung auf.

In eine Variante ist die wenigstens eine S-Luftleiteinrichtung mittels eines Stellgliedes, z. B. eines Stellrades oder eines Stellhebels, bewegbar.

Zweckmäßig ist die wenigstens S-Luftleiteinrichtungen kinematisch mit dem Stellglied gekoppelt, z, B, mittels einer Welle und/oder einem Hebel und/oder einem Zahnrad.

In einer weiteren Ausgestaltung steht das Stellglied mittels eines Mechanismus mechanisch in Wirkverbindung zu der wenigstens einen S-Luftleiteinrichtung.

In einer weiteren Ausführungsform ist die wenigstens eine S-Luftleiteinrichtung mittels eines Aktuators, z. B. eines Stellmotors, bewegbar. Der Aktuator ist beispielsweise ein Elektromotor und mechanisch durch einen Mechanismus, z. B. mittels Hebel und/oder Zahnrädern, mechanisch mit der wenigstens einen S-Luftleiteinrichtung gekoppelt.

Insbesondere ist die Stellung der wenigstens einen S-Luftleiteinrichtung mittels einer Eingabeeinheit, z. B. wenigstens eine Taste oder ein Stellrad mit einem Potentiometer, steuerbar. Die Eingabeeinheit ist vorzugsweise im Bereich eines Gehäusevorderteils des Luftausströmers bzw. im Bereich der Auslassöffnungen an dem Luftausströmer angeordnet. Der Benutzer betätigt die Eingabeeinheit, indem er z. B. auf eine Taste drückt oder ein Stellrad bewegt, so dass dadurch mittels Steuersignalen der Aktuator angesteuert wird und vorzugsweise elektrisch die wenigstens eine S-Luftleiteinrichtung bewegt. Dabei werden vorzugsweise sämtliche S-Luftleiteinrichtungen synchron beim Betätigen der Eingabeeinheit oder des Stellgliedes bewegt.

In einer weiteren Ausgestaltung weist der Luftausströmer eine SD-Luftleiteinrichtung zur Steuerung der aus der wenigstens einen D-Auslassöffnung und der wenigstens einen S-Auslassöffnung ausleitbaren Luftmenge auf.

In einer ergänzenden Variante weist der Luftausströmer einen SD-Luftzuführungskanal zur Zuführung von Luft zu dem wenigstens einen S-Luftzuführungskanal und dem wenigstens einen D-Luftzuführungskanal auf.

In einer weiteren Variante ist die SD-Luftleiteinrichtung in dem SD-Luftzuführungskanal angeordnet.

In einer weiteren Ausgestaltung ist mittels der SD-Luftleiteinrichtung die aus sämtlichen Auslassöffnungen ausleitbare Luftmenge steuerbar. Bei einer vollständig geschlossenen SD-Luftleiteinrichtung strömt somit aus dem Luftausströmer keine Luft und bei einer vollständig geöffneten SD-Luftleiteinrichtung strömt die maximal mögliche Menge an Luft aus dem Luftausströmer. Damit kann der Luftausströmer zwischen den Ausströmmoden zu und geöffnet gesteuert werden. Zwischenstellungen können stufenlos mit der SD-Luftleiteinrichtung angesteuert werden. Bei einer geöffneten SD-Luftleiteinrichtung kann mittels der wenigstens einen S-Luftleiteinrichtung zwischen den Ausströmmoden nur Diffus- und Spot- sowie Diffusstrahl gesteuert werden.

In einer weiteren Ausgestaltung ist die Stellung der SD-Luftleiteinrichtung mittels eines Stellgliedes oder einer Eingabeeinheit steuerbar. Die Steuerung der Stellung der SD-Luftleiteinrichtung erfolgt in analoger Weise zu der Steuerung der Stellung der wenigstens einen S-Luftleiteinrichtung.

Erfindungsgemäße Kraftfahrzeugklimaanlage, wobei die Kraftfahrzeugklimaanlage wenigstens einen in dieser Schutzrechtsanmeldung beschriebenen Luftausströmer umfasst.

Insbesondere weist die Kraftfahrzeugklimaanlage zwei Luftausströmer jeweils für eine Fahrerseite und eine Beifahrerseite auf und die Stellung der wenigstens einen S-Luftleiteinrichtung und/oder der SD-Luftleiteinrichtung ist separat bzw. unabhängig voneinander oder gekoppelt bzw. gemeinsam für die Fahrerseite und die Beifahrerseite steuerbar. Bei einer Kraftfahrzeugklimaanlage sind im Allgemeinen jeweils an der Fahrerseite und an der Beifahrerseite ein in dieser Schutzrechtsanmeldung beschriebener Luftausströmer angeordnet. Bei einer separaten oder unabhängig voneinander steuerbaren Stellung der wenigstens einen S-Luftleiteinrichtung und/oder der SD-Luftleiteinrichtung ist für den Luftausströmer an der Fahrerseite separat ein Stellglied bzw. eine Eingabeeinheit für die wenigstens eine S-Luftleiteinrichtung und ein Stellglied bzw. eine Eingabeeinheit für die SD-Luftleiteinrichtung erforderlich. In analoger Weise ist für die Beifahrerseite separat ein Stellglied bzw. eine Eingabeeinheit für die wenigstens eine S-Luftleiteinrichtung und ein weiteres Stellglied bzw. eine Eingabeeinheit für die SD-Luftleiteinrichtung erforderlich. Bei einer gekoppelten bzw. gemeinsam gesteuerten Stellung der wenigstens einen S-Luftleiteinrichtung und der SD-Luftleiteinrichtung für den Luftausströmer sowohl an der Fahrerseite als auch an der Beifahrerseite ist nur ein Stellglied bzw. eine Eingabeeinheit für die wenigstens zwei S-Luftleiteinrichtungen sowohl für den Luftausströmer an der Fahrerseite als auch an der Beifahrerseite und ein Stellglied bzw. eine Eingabeeinheit für die zwei SD-Luftleiteinrichtungen des Luftausströmers an der Fahrerseite und an der Beifahrerseite erforderlich.

In einer ergänzenden Ausführungsform sind Stellungen der wenigstens einen S-Luftleiteinrichtung und/oder der SD-Luftleiteinrichtung stufenlos einstellbar. Der Luftausströmer kann damit besonders einfach von z. B. einem Stellrad bedient werden. Mittels des Stellrades ist es möglich, stufenlos die Luftmenge zu steuern, welche aus der wenigstens einen S- und D- Auslassöffnung ausleitbar ist.

In einer weiteren Ausgestaltung weist die wenigstens eine S- und/oder SD-Luftleiteinrichtung am Rand Dichtungselemente, z. B. eingesteckte oder aufgeklebte Schaumdichtungen, Gummieinsätze, auf. Vorzugsweise sind die Dichtelemente mittels Umspritzung mit der S-und/oder SD-Luftleiteinrichtung verbunden.

In einer weiteren Ausgestaltung ist der Luftausströmer mit wenigstens einem Mittel zur Erzeugung eines Diffus- oder Drallstrahles an der wenigstens einen D-Auslassöffnung versehen, z. B. in dem wenigstens einen D-Luftzuführungskanal.

In einer ergänzenden Variante ist das wenigstens eine Mittel als schrauben- oder schneckenförmige Luftleitvorrichtung, z. B. eine Wandung oder ein wandartiger Vorsprung, ausgebildet.

In einer weiteren Variante ist die wenigstens eine S-Auslassöffnung im Querschnitt im Wesentlichen kreis- oder ellipsenförmig ausgebildet.

In einer weiteren Ausgestaltung ist die wenigstens eine S-Auslassöffnung im Querschnitt innerhalb der wenigstens einen D-Auslassöffnung ausgebildet und/oder die wenigstens eine D-Auslassöffnung ist konzentrisch um die wenigstens eine S-Auslassöffnung ausgebildet.

In einer weiteren Ausgestaltung umfasst die Kraftfahrzeugklimaanlage einen Kältemittelverdampfer und/oder ein Gebläse und/oder eine Heizeinrichtung und/oder einen Luftfilter.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Luftausströmers,
- Fig. 2: eine Vorderansicht des Luftausströmers gemäß Fig. 1,
- Fig. 3: einen Schnitt B-B gemäß Fig. 2 mit einer S-Luftklappe in einer geschlossenen Stellung und
- Fig. 4: den Schnitt B-B gemäß Fig. 2 mit der S-Luftklappe in einer geöffneten Stellung.

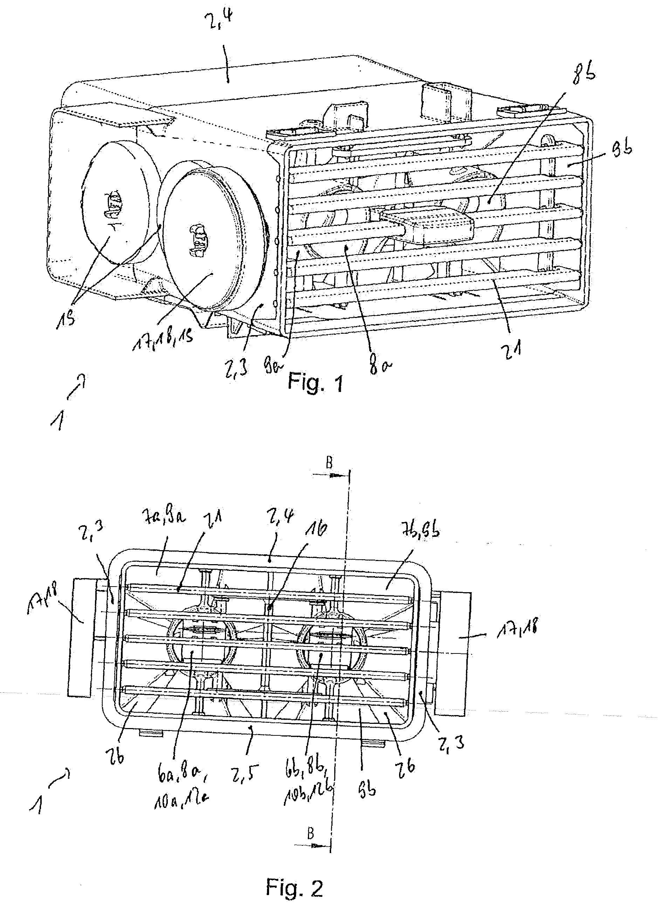

In Fig. 1 ist eine perspektivische Ansicht eines Luftausströmers 1 für ein Kraftfahrzeug abgebildet. Der Luftausströmer 1 dient dazu, um Luft in den Fahrzeuginnenraum eines Kraftfahrzeuges einzuleiten (nicht dargestellt). Der Luftausströmer 1 umfasst ein Gehäuse 2 mit zwei Seitenwandungen 3, einer Deckwandung 4 und einer Bodenwandung 5 (Fig. 1 und 2). Mittig in dem Gehäuse 2 ist eine Trennwand 16 ausgebildet. Das Gehäuse 2 ist in ein Gehäusevorderteil 24, ein Gehäusemittelteil 25 und einen rückseitigen Klappenkasten 23 unterteilt.

Der Luftausströmer 1 weist zwei S-Auslassöffnungen 8a, 8b zum Ausleiten der Luft als Spotstrahl auf. Der Luftausströmer 1 ist dabei mit einer linken S-Auslassöffnung 8a und mit einer rechten S-Auslassöffnung 8b versehen (Fig. 1 und 2). Ferner weist der Luftausströmer 1 zwei D-Auslassöffnung 9a, 9b zum Ausleiten der Luft als Diffus- oder Drallstrahl auf. Die beiden D-Auslassöffnungen 9a, 9b sind mittels der Trennwand 16 abgetrennt innerhalb des Gehäuses 2 ausgebildet.

Zur Erzeugung einer diffusen oder drallartigen Luftströmung sind im Bereich der D-Ausfassöffnungen 9a, 9b und/oder von D-Luftzuführungskanälen 7a, 7b schraubern- oder schneckenförmige, nicht bewegliche Luftleitvorrichtungen 26 vorhanden (Fig. 2).

Der Luftausströmer 1 weist zwei S-Luftzuführungskanäle 6a, 6 b auf. Ein erster linker S-Luftzuführungskanal 6a mündet in die erste linke S-Auslassöffnung 8a und ein zweiter rechter S-Luftzuführungskanal 6b mündet in die zweite rechte S-Auslassöffnung 8b. Ferner weist der Luftausströmer 1 zwei D-Luftzuführungsftanäle 7a, 7b auf. Die zwei D-Luftzuführungskanäle 7a, 7b münden dabei jeweils in die D-Auslassöffnungen 9a, 9b aus der die Luft als Diffus- oder Drallstrahl ausgeleitet wird. Die zwei D-Luftzuführungskanäle 7a, 7b sind dabei innerhalb der Wandungen 3, 4, 5, des Gehäuses 2 des Luftausströmers 1 ausgebildet. Am Ende der beiden S-Luftzuführungskanäle 6a, 6b ist jeweils ein verschwenkbarer Rohrstutzen 22 ausgebildet. Die Rohrstutzen 22 sind dabei um eine vertikale Achse verschwenkbar, so dass der als Spotstrahl aus den S-Auslassöffnungen 8a, 8b austretende Luftstrahl in horizontaler Richtung steuerbar ist (nicht dargestellt). Die D- und S-Auslassöffnungen 8a, 8b, 9a, 9b weisen ferner Lamellen 21 auf. Die Lamellen 21 im Bereich des Gehäusevorderteils 24 können um eine horizontale Richtung verschwenkt werden, so dass der aus den S-Auslassöffnungen 8a, 8b und den D-Auslassöffnungen 9a, 9b austretende Luftstrahl in einer vertikalen Richtung steuerbar ist (nicht dargestellt).

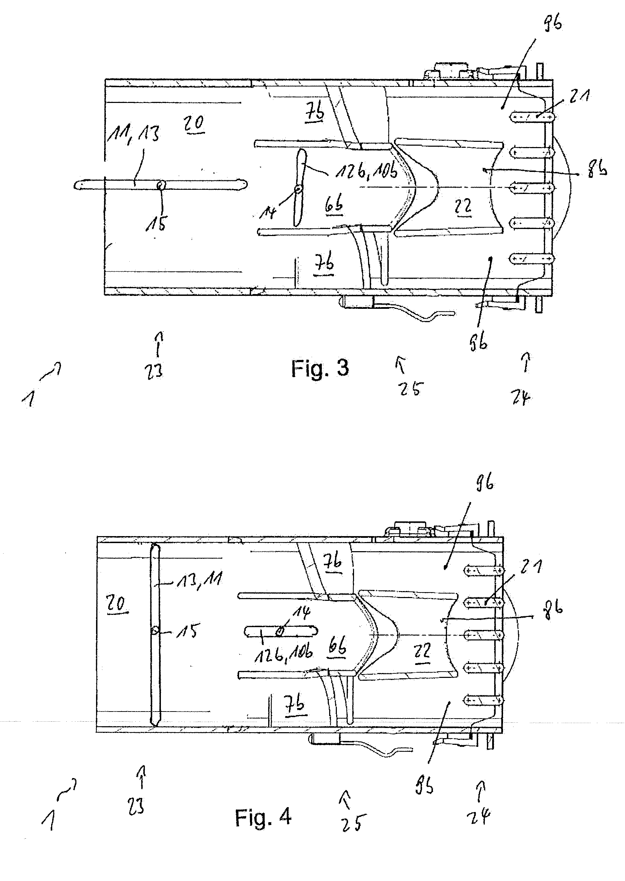

In dem ersten S-Luftzuführungskanal 6 a ist eine als erste S-Luftklappe 12 a ausgebildete erste S-Luftleiteinrichtung 10 a angeordnet. In analoger Weise ist in dem zweiten S-Luftzuführungskanal 6 b eine als zweite S-Luftleiteinrichtung 10 b ausgebildete zweite S-Luftklappe 12 b angeordnet. Die Luftleiteinrichtungen 10 a, 10 b im Bereich eines Gehäusemittelteiles 25 sind um eine S-Schwenkachse 14 verschwenkar, die senkrecht auf der Zeichenebene von Fig. 3 und 4 steht (Fig. 2 bis 4).

In der Stellung in Fig. 3 ist die S-Luftklappe 12b geschlossen, so dass aus der S-Auslassöffnung 8b keine Luft ausströmen kann. In Fig. 4 ist die S-Luftklappe 12b vollständig geschlossen, so dass die maximal mögliche Luftmenge aus der S-Auslassöffnung 8b ausströmen kann.

An einem Klappenkasten 23 des Gehäuses 2 ist eine als SD-Luftklappe 13 ausgebildete SD-Luftleiteinriehtung 11 vorhanden. Die SD-Luftklappe 13 ist um eine SD-Schwenkachse 15 verschwenkbar. Die SD-Schwenkachse 15 steht senkrecht auf der Zeichenebene von Fig. 3 und 4. In Fig. 3 befindet sich die SD-Luftklappe 13 in einer vollständig geöffneten Stellung, so dass die Luft sowohl in die beiden S-Luftzuführungskanäle 6a, 6b als auch in die beiden D-Luftführungskanäle 7a, 7b einströmen kann. Aufgrund der Stellung der S-Luftklappen 12a, 12b in Fig. 3 sind jedoch die S-Luftzuführungskanäle 6a, 6b vollständig geschlossen, so dass die Luft ausschließlich aus den D-Luftzuführungskanälen 7a, 7b ausströmt. Damit befindet sich der Luftausströmer 1 in einem Ausströmmodus, in dem die maximal mögliche Luftmenge aus den beiden D-Luftzuführungskanälen 7a, 7b als Diffus- oder Drallstrahl ausströmt. Soll zusätzlich zum Ausströmen der Luft aus den beiden D-Luftzuführungskanälen 7a, 7b auch Luft aus den S-Luftzuführungskanälen 6a, 6b als Spottstrahl ausströmen, brauchen lediglich die beiden S-Luftklappen 12a, 12b geöffnet werden (nicht dargestellt). Zwischenstellungen der SD-Luftklappe 13 und der beiden S-Luftklappen 12a, 12b können beliebig eingestellt werden.

In der Darstellung in Fig. 4 ist die SD-Luftklappe 13 vollständig geschlossen. Bei einer vollständig geschlossenen SD-Luftklappe 13 kann aus sämtlichen Auslassöffnungen 8a, 8b, 9a, 9b, d. h. den beiden S-Auslassöffnungen 8a, 8b und den beiden D-Auslassöffnungen 9a, 9b, keine Luft ausströmen. Die Stellung der beiden S-Luftklappen 12a, 12b hat hier keine Bedeutung. Der Luftausströmer 1 befindet sich damit in dem Ausströmmodus geschlossen.

Der stufenlosen Veränderung der Stellung der beiden S-Luftklappen 12a, 12b und der SD-Luftklappe 13 kann somit zwischen den Ausströmmodus geschlossen, dem Ausströmmodus ausschließlich diffus (Stellung der S-Luftklappen 12a, 12b und der SD-Luftklappe 13 gemäß Fig. 3) und dem Ausströmmodus Spot und Diffusstrahl gesteuert werden. Zwischenstellungen können stufenlos eingestellt werden aufgrund der stufenlosen Verstellbarkeit der beiden S-Luftklappen 12a, 12b und der SD-Luftklappe 13.

Im Bereich des Gehäusevorderteiles 24 sind an den Seitenwandungen 3 des Gehäuses 2 jeweils als Stellräder 18 ausgebildete Stellglieder 17 vorhanden. Das Stellrad 18 ist mittels Zahnrädern 19 mechanisch mit einer Steuerwelle (nicht dargestellt) für die beiden S-Luftklappen 12a, 12b gekoppelt. Beim Bewegen des in Fig. 1 dargestellten Stellrades 18 bzw. des in Fig. 2 links dargestellten Stellrades 18 wird die SD-Luftklappe 13 zwischen der vollständig geöffneten Stellung gemäß Fig. 3 und der vollständig geschlossenen Stellung gemäß Fig. 4 stufenlos verstellt. In analoger Weise können mittels des in Fig. 2 rechts dargestellten Stellrades 18 die beiden S-Luftklappen 12a, 12b zwischen der vollständig geschlossenen Stellung gemäß Fig. 3 und der vollständig geöffneten Stellung gemäß Fig. 4 stufenlos verstellt werden. Dabei werden beide S-Luftklappen 12a, 12b von einer gemeinsamen Antriebswelle synchron bewegt.

Der Luftausströmer 1 besteht im Wesentlichen aus Kunststoff. Insbesondere besteht das Gehäuse 2 und die S-Luftklappen 12a, 12b sowie die SD-Luftklappe 13 im Wesentlichen aus Kunststoff. Vorzugsweise bestehen auch die Lamellen 21 und die Luftleitvorrichtungen 26 aus Kunststoff.

Insgesamt betrachtet sind mit dem erfindungsgemäßen Luftausströmer 1 und der erfindungsgemäßen Kraftfahrzeugklimaanlage erhebliche Vorteile verbunden. Der Luftausströmer 1 weist zwei S-Luftklappen 12, 12b und eine SD-Luftklappe 13 auf. Die Luftklappen 12a, 12b und 13 werden in einfacher Weise ohne aufwendige Kurvenscheiben mittels Stellrädern 18 bewegt. Dabei ist es in besonders vorteilhafter Weise möglich Luftausströmer 1, die sowohl an der Fahrer- als auch an der Beifahrerseite angeordnet sind, sowohl separat als auch gemeinsam anzusteuern. Bei einer gemeinsamen Ansteuerung brauchen lediglich sämtliche S-Luftklappen der Luftausströmer 1 sowohl an der Fahrer- als auch an der Beifahrerseite von einer ersten gemeinsamen Antriebswelle bewegt werden und die beiden SD-Luftklappen 13 an der Fahrer- und Beifahrerseite von einer weiteren gemeinsamen Antriebswelle bewegt werden.

### Bezugszeichenliste

- 1: Luftausströmer
- 2: Gehäuse
- 3: Seitenwandung
- 4: Deckwandung
- 5: Bodenwandung
- 6: S-Luftzuführungskanal (6a, 6b)
- 7: D-Luftzuführungskanal (7a, 7b)
- 8: S-Auslassöffnung (8a, 8b)
- 9: D-Auslassöfinung (9a, 9b)
- 10: S-Luftleiteinrichtung (10a, 10b)
- 11: SD-Luffleiteinrichtung
- 12: S-Luftklappe (12a, 12b)
- 13: Sud-Luftklappe
- 14: S-Schwenkachse
- 15: SD-Schwenkachse
- 16: Trennwand
- 17: Stellglied
- 18: Stellrad
- 19: Zahnrad
- 20: SD-Luftzuführungskanal
- 21: Lamelle
- 22: Rohrstutzen
- 23: Klappenkasten
- 24: Gehäusevorderteil
- 25: Gehäusemittelteil
- 26: Luftleitvorrichtungen

## Patentansprüche

1. Luftausströmer (1), insbesondere für ein Fahrzeuginnenraum-Belüftungssystem, umfassend
- wenigstens einen S-Luftzuführungskanal (6a, 6b) und wenigstens einen D-Luftzuführungskanal (7a, 7b),
- wenigstens eine S-Auslassöffnung (8a, 8b) zum Ausleiten der Luft aus dem wenigstens einen S-Luftzuführungskanal (6a, 6b) als Spotstrahl,
- wenigstens eine D-Auslassöffnung (9a, 9b) zum Ausleiten der Luft aus dem wenigstens einen D-Luftzuführungskanal (7a, 7b) als Diffus- oder Drallstrahl,
- wenigstens eine S-Luftleiteinrichtung (10a, 10b) zur Steuerung der aus der wenigstens einen S-Auslassöffnung (8a, 8b) ausleitbaren Luftmenge,
**dadurch gekennzeichnet, dass**
der Luftausströmer keine D-Luftleiteinrichtung zur, insbesondere ausschließlichen, Steuerung der aus der wenigstens einen D-Auslassöffnung ausleitbaren Luftmenge aufweist.

2. Luftausströmer nach Anspruch 1, **dadurch gekennzeichnet, dass** die wenigstens eine S-Luftleiteinrichtung (10a, 10b) ausschließlich zur Steuerung der aus der wenigstens einen S-Auslassöffnung (8a, 8b) ausleitbaren Luftmenge dient.

3. Luftausströmer nach Anspruch 1 oder 2, **dadurch gekennzeichnet, dass** die wenigstens eine S-Luftleiteinrichtung (10a, 10b) eine S-Luftklappe (12a,12b) oder ein S-Rollband oder ein S-Schirm ist.

4. Luftausströmer nach Anspruch 3, **dadurch gekennzeichnet, dass** die wenigstens eine S-Luftleiteinrichtung (10a, 10b) zur ausschließlichen Steuerung der aus der wenigstens einen S-Auslassöffnung (8a, 8b) ausleitbaren Luftmenge dient.

5. Luftausströmer nach einem oder mehreren der vorhergehenden Ansprüchen, **dadurch gekennzeichnet, dass** die wenigstens eine S-Luftleiteinrichtung (10a, 10b) in dem wenigstens einen S-Luftzuführungskanal (6a, 6b) angeordnet ist.

6. Luftausströmer nach einem oder mehreren der vorhergehenden Ansprüchen, **dadurch gekennzeichnet, dass** die wenigstens eine S-Luftleiteinrichtung (10a, 10b) mittels eines Stellgliedes (17) , z.B. eines Stellrades (18) oder eines Stellhebels, bewegbar ist.

7. Luftausströmer nach Anspruch 6, **dadurch gekennzeichnet, dass** die wenigstens S-Luftleiteinrichtungen (10a, 10b) kinematisch mit dem Stellglied (17) gekoppelt ist, z. B. mittels einer Welle und/oder einem Hebel und/oder einem Zahnrad (19).

8. Luftausströmer nach einem oder mehreren der Ansprüchen 1 bis 6, **dadurch gekennzeichnet, dass** die wenigstens eine S-Luftleiteinrichtung (10a, 10b) mittels eines Aktuators, z. B. eines Stellmotors, bewegbar ist.

9. Luftausströmer nach Ansprüche 8, **dadurch gekennzeichnet, dass** die Stellung der wenigstens einen S-Luftleiteinrichtung (10a, 10b) mittels einer Eingabeeinheit, z. B. wenigstens eine Taste oder ein Stellrad mit einem Potentiometer, steuerbar ist.

10. Luftausströmer nach einem oder mehreren der vorhergehenden Ansprüche, **dadurch gekennzeichnet, dass** der Luftausströmer (1) eine SD-Luftleiteinrichtung (11) zur Steuerung der aus der wenigstens einen D-Auslassöffnung (9a, 9b) und der wenigstens einen S-Auslassöffnung (8a, 8b) ausleitbaren Luftmenge aufweist.

11. Luftausströmer nach Anspruch 10, **dadurch gekennzeichnet, dass** der Luftausströmer (1) einen SD-Luftzuführungskanal (20) zur Zuführung von Luft zu dem wenigstens einen S-Luftzuführungskanal (6a, 6b) und dem wenigstens einen D-Luftzuführungskanal (7a, 7b) aufweist.

12. Luftausströmer nach Anspruch 11, **dadurch gekennzeichnet, dass** die SD-Luftleiteinrichtung (11) in dem SD-Luftzuführungskanal (20) angeordnet ist.

13. Luftausströmer nach einem oder mehreren der Ansprüche 10 bis 12, **dadurch gekennzeichnet, dass** die Stellung der SD-Luftleiteinrichtung (11) mittels eines Stellgliedes (17) oder einer Eingabeeinheit steuerbar ist.

14. Kraftfahrzeugklimaanlage, **dadurch gekennzeichnet, dass** die Kraftfahrzeugklimaanlage wenigstens einen Luftausströmer (1) gemäß einem oder mehreren der vorhergehenden Ansprüche umfasst.

15. Kraftfahrzeugklimaanlage nach Anspruch 14, **dadurch gekennzeichnet, dass** die Kraftfahrzeugklimaanlage zwei Luftausströmer (1) jeweils für eine Fahrerseite und eine Beifahrerseite aufweist und die Stellung der wenigstens einen S-Luftleiteinrichtung (10a, 10b) und/oder der SD-Luftleiteinrichtung (11) separat bzw. unabhängig voneinander oder gekoppelt bzw. gemeinsam für die Fahrerseite und die Beifahrerseite steuerbar ist.
